# EUROPEAN PATENT SPECIFICATION

(11) **EP 1 322 066 B1**
(45) Date of publication and mention of the grant of the patent: **20.12.2006**
(21) Application number: 02293097.8
(22) Date of filing: 13.12.2002
(51) Int. Cl.: H04L 12/24

(54) **Command line interface processor**
Prozessor für die Befehlszeilenschnittstelle
Processeur d' interface de ligne de commande

(30) Priority: 19.12.2001 CA 2365436; 05.04.2002 US 115900
(43) Date of publication of application: 25.06.2003
(73) Proprietor: Alcatel Canada Inc., Ottawa, Ontario K2K 2E6 (CA)
(72) Inventor: Murray, Christopher (Warren), Ottawa, Ontario K2C 4E1 (CA); Chan, David Wing-Chung, Nepean, Ontario K2G 6J9 (CA); Landry, Kevin Edgar Daniel, Ottawa, Ontario K2B 6L2 (CA); Katz, Felix, Ottawa, Ontario K2B 8E2 (CA); Ngo, Chuong Ngoc, Ottawa, Ontario K2G 6G5 (CA); Zabihi, Attallah, Ottawa, Ontario K2B 8C8 (CA)
(74) Representative: Feray, Valérie

(56) References cited:
- EP-A- 1 030 251
- WO-A-93/18598
- US-A- 6 061 332
- US-B1- 6 239 718
- ISRAEL R ET AL: "Configuration Management of Large IP Telephony Networks" IEEE, 10 April 2000 (2000-04-10), pages 435-446, XP010376700

## Description

The invention relates to data network management and in particular to command driven data network management.

In the field of data network management, data transport networks are made up of a collection of managed data transport equipment. Data services are provisioned over the managed data transport equipment.

In a competitive market place, due to a recent explosive technological development, the network management and service provisioning task is complicated by many factors including: multiple data network equipment vendors having multiple approaches in implementing the data network equipment; a multitude of data transport technologies, with each vendor specializing in a sub-group of the multitude of data transport technologies; a multitude of network management and service provisioning protocols, with each vendor implementing only a sub-group of the multitude of network management and service provisioning protocols; a multitude of auxiliary network management and service provisioning equipment employing yet another multitude of network management and service provisioning technologies; etc.

Data transport equipment includes, but is not limited to: data switching equipment, routers, bridges, access nodes providing a multiplexing function, Remote Access Servers (RAS), distribution nodes providing a demultiplexing function, Customer Premise Equipment (CPE), etc. with next generation data transport equipment in development.

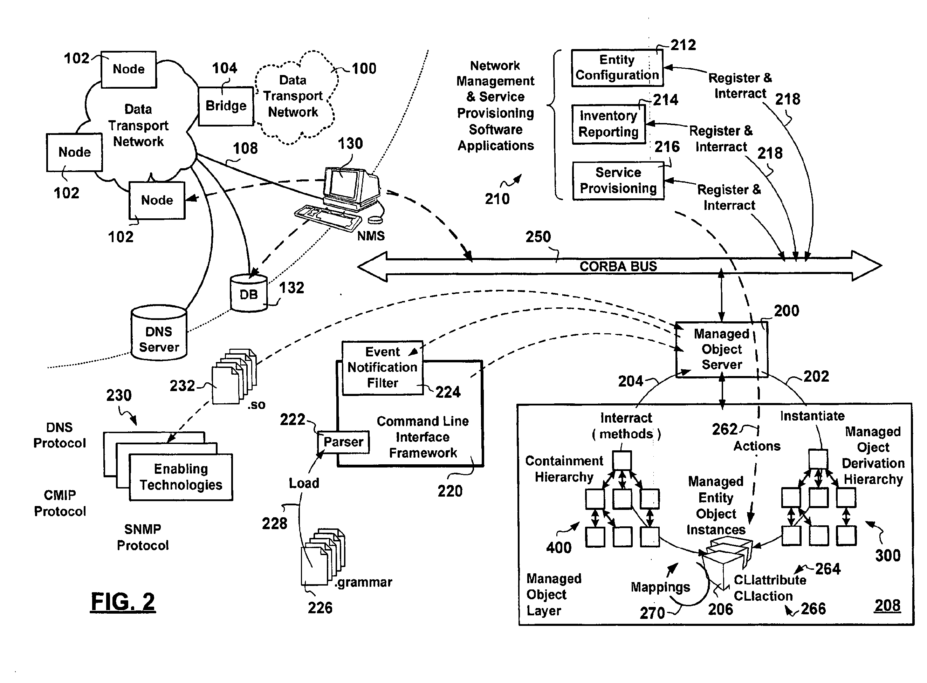

With regards to data network equipment, for example data switching nodes schematically shown in FIG. 1, a vendor may chose to implement an integral device 110 having a data switching processor and a group of ports 112, while another vendor may chose a customizable implementation of a data switching node 120 including: a switching fabric, an equipment rack divided into shelves, each shelf 122 having slot connectors for connection with interface cards, each interface card 124 having at least one port 112. Although conceptually the two data switching nodes 110 and 120 provide the same data switching function, each implementation is adapted for a different environment: the former data switching node 110 being more adapted to provide enterprise solutions as a private data network node, perhaps being further adapted to enable access to public data services; while the latter data switching node 120 is better adapted for high data throughput in the core of public data transport networks. Typically the former (110) implements a small number of data transport protocols while for the latter (120), data transport protocols are implemented on interface cards 124 and/or ports 112 - providing for a flexible deployment thereof. All data network equipment is subject to design choices which are bound to be different from vendor to vendor.

Data transport technologies include: electrical transmission of data via copper pairs, coaxial cable, etc: optical transmission of data via optical cables; free space optical interconnects, etc.; wireless transmission of data via radio modems, microwave links, wireless Local Area Networking (LAN), etc.; with next generation data transport technologies under development.

Data transport protocols used to convey data between data transport equipment includes: Internet Protocol (IP), Ethernet technologies, Token-Ring technologies, Fiber Distributed Data Interface (FDDI), Asynchronous Transmission Mode (ATM), Synchronous Optical NETwork (SONET) transmission protocol, Frame Relay (FR), X-25, Time Division Multiplexing (TDM) transmission protocol, Packet-Over-SONET (POS), Multi-Protocol Label Switching (MPLS), etc. with next generation data transport protocols under development.

The physical data network equipment alluded to above is part of a larger body of managed data network entities enabling the provision of data services. The data network entities also include, but are not limited to: virtual routers, logical ports, logical interfaces, end-to-end data links, paths, virtual circuits, virtual paths, etc.

Network management and service provisioning enabling technologies include, but are not limited to protocols: Simple Network Management Protocol (SNMP), Common Management Information Protocol (CMIP), Command Line Interface (CLI), etc.; as well as devices: special function servers, centralized databases, distributed databases, relational databases, directories, network management systems, etc. with next generation devices and technologies under development.

Network management and service provisioning solutions include Network Management Systems (NMS) 130 enabled via special purpose software applications coded to configure and control the above mentioned data network entities. Such software applications include, but are not limited to: inventory reporting, configuration management, statistics gathering, performance reporting, fault management, network surveillance, service provisioning, billing & accounting, security enforcement, etc.

It is a daunting task to provide network management and service provisioning solutions taking into account the permutations and combinations of the elements presented above. Prior art approaches to providing network management and service provisioning solutions include the coding of hundreds of software applications with knowledge of hundreds of data networking entities using tens of data transmission and network management protocols. Some prior art solutions attempt to code all-encompassing large monolithic network management and service provisioning software applications.

Coding, deploying, maintaining, and extending such software applications for network management and service provisioning has been and continues to be an enormous undertaking as well as an extremely complex procedure. Such software applications require a large number of man-hours to create, frequently are delivered with numerous problems, and are difficult to modify and/or support. The difficulty in creating and supporting large applications is primarily due to the inability of existing software development paradigms to provide a simplification of the software development process. In accordance with current coding paradigms, the complexity of the software applications has been shown to increase as an exponential function of the number of different operations that are expected to be performed. Large programming efforts suffer in terms of reasonable performance, reliability, cost of development, and reasonable development cycles.

Object Oriented Programming (OOP) attempts to improve productivity whenever a problem can be simplified by decomposing it into a set of black-box objects. Object oriented programming depends heavily upon the benefits of data hiding, inheritance, and polymorphism to simplify software design. If a network management and service provisioning solution cannot be subdivided into objects, object oriented programming does not offer significant productivity improvements. Moreover, heavy reliance on object oriented programming to achieve compact code intending to reduce the size of software applications and perhaps development time, suffers from deeply nested function calls which creates a processing overhead leading to inefficient code. Deep nesting of function calls obscures the implementation paradigms used; thereby negatively impacting code debugging, code maintenance, and further development thereof.

Every data network entity has operational parameters associated therewith. Associations between data network entities are also made to enable: service provisioning (signaling, data transport, billing, etc.), providing redundancy (equipment, transport, bandwidth, etc.) as well as providing network management related data transport (network status updates, alarms, etc.)

In the field of data network management, typically data network elements have a network management interface complying to the SNMP protocol mentioned above. There are data network elements which do not support the SNMP protocol either by design or because these devices have been deployed prior to the standardization of the SNMP protocol. Also there are data network elements which do support the SNMP protocol, but by design these devices do not support all SNMP capabilities. The ability to configure data network elements using a Command Line Interface (CLI) is more common. The CLI is a text based human-machine mode of interaction making use of string commands and textual display of information. Typically CLI interfaces are used by an analyst to manually enter CLI commands to configure and control a single data network element for management thereof and in provisioning of data network services therethrough. The entry of CLI commands is considered to be a lengthy and error prone procedure. The industry has been searching for methods to automate CLI based configuration and control tasks.

A development attempt towards this end has been made through the establishment of the SNMP protocol as mentioned above. Although the SNMP protocol has been established, it is not implemented on all data network equipment, and not all data network equipment implements all SNMP capabilities.

Various data network element manufacturers have provided an interface to configure a data network element through the CLI interface. Such software applications tend to be proprietary and tend to address the configuration of one particular data network element as it was seen fit by the equipment vendor at the time of the development. Typically, such proprietary interfaces are non-extensible and do not lend themselves to integrated management of data network resources rendering their usefulness very limited.

Known attempts of configuration and control of data network elements includes a script based technique proposed by CISCO Systems Inc. The methods used include the manual creation of batch file scripts from CLI commands, where each script addresses a particular change in the configuration of a particular data network element. Such a script of CLI commands is downloaded to the particular data network element and it is issued for execution to carry out the desired changes. This attempt relies on the fact that all CISCO data network elements use the same set of CLI commands known as a vocabulary and grammar. Such solutions tend to be limited to a particular vendor equipment, i.e. CISCO routers. Furthermore, the scripts are issued with the expectation that the desired change is carried out.

Typically CLI commands return command completion codes including error codes, which have b be returned and interpreted by an analyst to make a decision whether the issued commands have had the desired effect. In issuing scripts to be executed, as mentioned above, the technique typically does not provide command completion code processing. Scripts including error message processing tend to be fairly complicated requiring a lot of development and maintenance.

From time-to-time, as data network elements are updated, the update typically also introduces changes to the CLI vocabulary and/or grammar. The use of complicated scripts tends to hinder the configuration and control as the scripts also have to be updated to reflect changes in the CLI vocabulary and/or grammar.

Other data network management software vendors have taken other approaches in implementing the network management using CLI commands.

Service Activator by Orchestream Holdings Plc. makes use of device driver software that allows a CISCO data network element specific configuration to be made therethrough. Each device driver includes specific application code for managing a data network element. The device driver code is used to extract a current state of a data network element, compare the currently reported state against a virtual state held by network management and service provisioning software, generate a group of CLI commands which are necessary in synchronizing the virtual and real states, and sends the group of CLI commands to be executed by the data network element. The process iterates until the reported current state matches the virtual state. This attempt does not address errors generated by the issuing of CLI commands, rather derives alarms from discrepancies between the current state and the virtual state. This attempt makes use of hardcoded device drivers which contain machine readable object code unintelligible to an analyst attempting to debug such a driver.

These efforts are all laudable, but the productivity of the development and maintenance of such complex attempts for network management and service provisioning suffers. In particular, support for new data network entities, updated CLI vocabularies and/or CLI grammar, requires the whole software application to be re-compiled and re-deployed. There is always a risk of incorporating further errors in existing code when dealing with such large software applications thereby requiring extensive regression testing to verify the integrity of the existing code.

One object of the present invention is to provide improved methods of software application code development and maintenance taking into account the above mentioned complexities.

Patent document WO-A-93 18598 discloses a network management system that attributes commands to network elements according to their internal command language. It generates service requests in a network element independent format, and then converts them into the appropriate internal command of the addressed network element. An parameter file update procedure is provided to read the internal commands and internal data structures of the network elements.

According to a first aspect, the invention provides a Command Line Interface framework for a network manager that manages a plurality of managed entities of a communication network according to claim 1.

According to a second aspect, the invention provides method for automated configuration of a managed entity of a communication network equipped with a network manager, according to claim 10.

An embodiment provides a network management and service provisioning Command Line Interface (CLI) framework, comprising:
- a processor responsive to at least one notification;
- a dictionary having a plurality of dictionary entries, the plurality of dictionary entries holding vocabulary and grammar specifications of a plurality of commands used in interacting with at least one managed data network entity; and
- a communications module sending in sequence for execution and monitoring, at least one selection of the plurality of commands generated in response to the notification as specified in the plurality of dictionary entries
wherein a network management and service provisioning solution is provided making abstraction of the at least one managed data network entity.

Thus, the solution provides automated configuration management of data network entities from different vendors when SNMP is not a viable option. The automation eliminates manual CLI command entry, provides support for multi-vendor equipment by using multiple CLI command vocabularies and CLI command dictionaries. The solution reduces data network entity management costs, downtime, and training time for analysts. The advantages are derived from an ability to add CLI commands to the dictionary, on demand, providing support for new types of data network entities with human readable code greatly improving the development and maintenance of the network management and service provisioning solution.

An embodiment provides a method of managing a data network entity in providing a network management and service provisioning solution is presented. The method includes a sequence of steps. At least one specification held in at least one dictionary entry associated with the managed data network entity, is retrieved. A sequence of commands required to configure the managed data network entity is derived from the at least one specification. Each one of the commands in the derived sequence are sent to the managed data network entity for execution. And, the execution of each one of the commands sent is monitored. The sending of the commands to the managed data network entity further includes establishing a communication session with a data network element comprising the managed data network entity.

In accordance with yet another embodiment, the framework further comprises a parser for the run-time loading of .grammar files and the extraction of vocabulary and grammar specifications therefrom to register types of managed data network entities with the network management and service provisioning solution. The extracted vocabulary and grammar specifications are used to populate the dictionary entries. The .grammar files are preferably human readable.

The features and advantages of the invention will become more apparent from the following detailed description of the preferred embodiments) with reference to the attached diagrams wherein:
FIG. 1 shows a schematic diagram showing data network elements implementing connected data transport networks;
FIG. 2 shows a schematic diagram showing elements implementing a network management and service provisioning solution in accordance with a preferred embodiment of the invention;
FIG. 3 shows a schematic diagram showing a managed entity object hierarchy used in providing the network management and service provisioning solution in accordance with the preferred embodiment of the invention;
FIG. 4 shows a schematic diagram showing an managed entity containment hierarchy used in providing the network management and service provisioning solution in accordance with the preferred embodiment of the invention;
FIG. 5 shows a schematic diagram showing interconnected components and process steps performed by the components in operating the invention;
FIG. 6 shows a schematic diagram showing an exemplary implementation of the preferred embodiment of the invention; and
FIG. 7 shows another schematic diagram showing another exemplary implementation of the preferred embodiment of the invention.

It will be noted that in the attached diagrams like features bear similar labels.

FIG. 1 is a schematic diagram showing data network elements implementing connected data transport networks.

Data network nodes 102, 110, 120 are physically interconnected in the data transport network 100 via physical links 108. Data transport networks 100 may be bridged via bridge data network nodes 104 to enable data exchange therebetween. Connected data transport networks 100 can be grouped defining areas of focus and influence for the purposes of network management and service provisioning, known as network partitions 106.

Physical links 108 provide Open Systems Interconnection (OSI) Layer-1 connectivity between data network nodes 102/104/110/120 physically conveying data for OSI Layer-2 data links between nodes 102/110/120 end-to-end. A Layer-2 data link may be provisioned over at least one physical data link 108 - the sequence of physical data links 108 used representing an OSI Layer-3 path 128.

Network management and service provisioning is typically performed with the aid of at least one Network Management System (NMS) 130 connected to at least one node 102 associated with a data transport network 100.

FIG. 2 is a schematic diagram showing elements implementing a network management and service provisioning solution.

A Managed Object Server (MOS) 200 facilitates the implementation of a software development methodology for coding complex software applications 210 relating to network management and service provisioning.

The MOS 200 implements a new architecture for providing network management and service provisioning solutions. The new architecture categorizes the above presented elements into:
- Manageable data network entities representative of field installed data network entities to be configured and controlled in providing network management and service provisioning solutions. The field installed data network entities include:
   i. Physical data network equipment installed in the field such as: nodes 102/104, routers, switches, hubs, OC-3 links 108, etc., and
   ii. Logical data network entities associated with data network equipment installed in the field such as: network partitions 106, paths 128, virtual circuits, virtual routers etc.;
- Network management and service provisioning software applications 210 used to configure and control the manageable data network entities. The software applications 210 include as mentioned above: inventory reporting 214, configuration management 212, statistics gathering, performance reporting, fault management, network surveillance, service provisioning 216, billing & accounting, security enforcement, etc. Human-machine interaction with the software applications 210 is provided to an analyst via the at least one NMS 130;
- Network management enabling technologies 230 providing interaction between manageable entities and field installed physical data network entities. Enabling technologies 230 include:
   i. Data network management and service provisioning protocols: SNMP, CMIP, CLI, DNS, etc., and
   ii. Data network management and service provisioning devices; databases, DNS servers, etc.

The network management and service provisioning solution may be command driven as specified by the software application 210, as well as event driven as a current state of the managed data transport network(s) in the realm of management changes.

The enabling technologies 230 include support for a concept referred b as "persistence". As mentioned above, each data network entity including data network equipment has an associated group of parameters. These parameters either have an effect on the operation of the data network entity or label the data network entity. The persistence concept encompasses the storage of, access to, reading, writing, modifying, synchronization/reconciliation, etc. of persistence parameters to control the operation of data network entities.

The persistence parameters can be stored in a network management and service provisioning database 132, as well as in registers associated with the managed physical data network equipment installed in the field. The persistence access to, reading of, writing of, modification of these parameters is provided via the enabling technologies 230 including but not limited to the data network management and service provisioning protocols mentioned above. Persistence reconciliation and synchronization is performed, for example, between a persistence database and a persistence value held in a volatile register ensuring a correct record keeping thereof, fast access to the persisted information and backup thereof. Distributed storage of persistence information is also used in reconfiguring data network equipment subsequent to network failures. Persistence reconciliation and synchronization may be envisioned to be performed between end data network equipment associated for example with a physical link, a data link, a path, a service, etc.

The persistence concept also encompasses special persistence types such as: constant persistence which can only be initialized but not modified or written to subsequently; as well as derived persistence which is not stored but rather calculated from other persistence values when needed.

In accordance with the preferred embodiment of the invention, coding techniques used in support of the preferred software development methodology enable on-demand loading of enabling technology support. These coding techniques implement what are known in the art as software application plug-ins such as, but not limited to: SNMP enabling technology plug-ins, CMIP enabling technology plug-ins, database plug-ins, etc. These plug-ins enable persistence support and are also referred to as persistence entity plug-ins. The persistence plug-ins 232 capture data and methods necessary to interact with actual persistence entities (databases, registers, etc.) Each persistence plug-in shared library (.so) file 232 contains a coded description of the functionality it is capable to provide.

In accordance with the preferred software development methodology, the persistence plug-ins 232 are coded in a general fashion without making special reference to the manageable data network entities or the software applications 210. The persistence plug-ins 232 are not to be linked-in with the software application 210 object code. Preferably, persistence plug-ins are provided as shared object code library (.so) files 232 which register 234 with the MOS 200 for on-demand loading thereof.

In accordance with the preferred software development methodology, the software applications 210 are also coded in a general fashion implementing the functionality provided while only making reference to manageable data network entities (via directives) in a high level abstract implementation of the functionality provided. Further details of the software development methodology regarding the software application 210 access to instances of manageable data network entities can be found in: co-pending patent application filed on December 19, 2001 with the United States Patent and Trademark Office by the Applicant entitled "NETWORK MANAGEMENT SYSTEM ARCHITECTURE" bearing serial number 10/021,080, and co-pending patent application filed on December 19, 2001 with the United States Patent and Trademark Office by the Applicant entitled "METHOD OF INVOKING POLYMORPHIC OPERATIONS IN A STATICALLY TYPED LANGUAGE" bearing serial number 10/021,629.

Specific information regarding manageable data network entities is held by the MOS 200 which instantiates 202, at run-time, and provides interaction 204 with, instances of managed object entities 206. In particular, the software applications 210 register 218 with the MOS 200 which augments the functionality thereof in providing access to instances 206 of specific manageable entities and methods associated therewith.

The managed object entity instances 206 exist in a Managed Object Layer (MOL) 208 associated with the MOS 200 which acts as an access facilitator.

The overall interaction 218/204 between the software applications 210 and the managed object type instances 206, changes the data network state and/or provides an update of the data network state by making use of the enabling technologies 230.

The instantiation 202 of the managed object types (300) is performed subsequent to the discovery of managed data network entities in the realm of influence of the network management and service provisioning solution. The discovery of physical managed entities is provided via software applications 210 such as the inventory reporting software application 214. The instantiation 202 of managed entity objects may also be a result of the interaction of an analyst with the NMS 130 via the software applications 210.

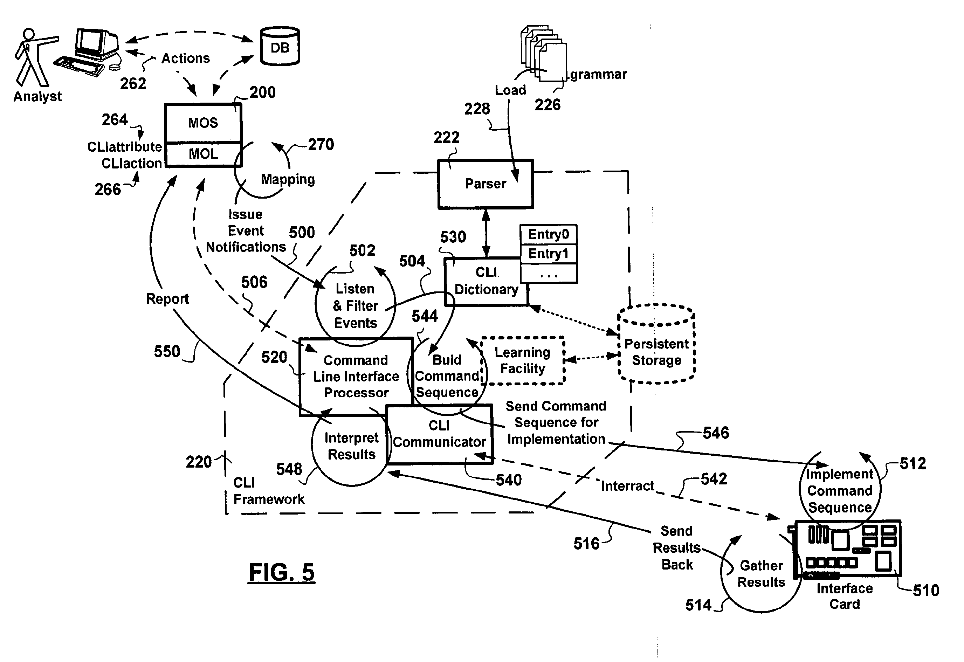

The MOL 208 makes use of a managed entity object derivation hierarchy 300 shown in FIG. 3 in instantiating 202 managed entity objects. The manageable entity object instances 206 define a managed object entity containment hierarchy 400 presented in FIG. 4. The containment hierarchy 400 may exists only as a combination of associations between instances of managed object entities 206 (but is not limited thereto).

As mentioned above, a specific enabling technology 230 may be used to provide persistence support if the field installed physical data network entity implements and has that particular enabling technology activated. CLI enabling technology support is the focus of the present invention. As mentioned above, Command Line Interfaces although not standardized between different vendor equipment, not even for equipment manufactured by a particular vendor, are more prevalent than standardized SNMP support, standardized CMIP support, etc.

In accordance with a preferred embodiment of the invention, a CLI framework 220 is provided. The CLI framework 220 provides command line interface configuration (i.e. persistence) support to managed entity object instances 206 and therefore by extension to software applications 210.

The amount of configuration and/or surveillance of persisted information associated with even the simplest of managed data transport networks tends to be very large. In accordance with a preferred embodiment of the invention, the CLI framework 220 consolidates persistence support for managed data network entities across multi-vendor equipment as well as across multiple vendor specific equipment types. The CLI framework 220 may include, but is not limited to a combination of hardware and software application code.

Each software application 210 is a client entity of the MOS 200. In the interaction 218/204, an MOS 200 client requests at least one action 262 to be invoked on a managed entity object instance 206 to change operational parameters as well as to change operational states of the corresponding managed data network entity. A variety of such actions 262 may be used, each of which may represent either a "basic action" or may be decomposed in a group of basic actions. A non-exhaustive list of basic actions 262 includes: create, update, read, delete actions, etc. In accordance with the preferred software development methodology, basic actions 262 implementations transcend each one of the software applications 210 registered with the MOS 200 leading to a generic implementation.

In accordance with the invention, the provision of CLI configuration of managed data network entities is enabled through special purpose CLIattributes 264 and methods implemented by the manageable entity objects (300). The special purpose methods include CLI specific side-effect actions 266 such as but not limited to: CLIcreation, CLIdeletion, CLIread, CLIupdate actions, etc.

A mapping function 270 is performed between basic actions 262 and CLIactions 266. CLImapping specifications are checked 270 to determine whether the specific basic actions 262 need CLI persistence support. Some basic actions 262 may only change CLIattributes 264. The change in CLIattributes 264 may in turn trigger CLIactions 266.

The mapping function 270 is necessary as the basic actions 262 may be atomic with respect to the software applications 210 while at the same time the basic actions 262 represent high level actions to be implemented via atomic CLIactions 266. The invention makes use of a special purpose CLImapping attributes 264 which hold mapping specifications.

The correspondence between a particular managed entity object instance 206 and the corresponding managed data network entity is provided via a unique CLI identification attribute (CLIid). The value held by each CLIid attribute may be derived at run-time from the associations of the managed entity object instance 206 defining the containment hierarchy 400. It is possible that the CLIid derivation is not unique for a particular managed entity object instance 206. For example, the particular managed entity object instance 206 having a non-unique CLIid can be configured as a subcomponent associated with multiple components of a data network node 102. Furthermore, managed entity object instances 206 such as physical links 108, paths 128, etc. always have two ends associated therewith. The configuration of physical links 108, paths 128, etc. is effected solely by configuring the ends thereof.

A CLIid may have the following form:
< node-... port-...>
which is typically a string of identifiers - preferably human readable.

The invention is not is not limited to the CLIid format shown. A CLIid is not necessarily derived from the containment hiearchy. It may also simply be a name associated with a managed object entity, such as "SomeRouterInterface". A CLIid may also be derived from other attribute values associated with a particular managed entity object instance. No CLIid structure whatsoever is implied.

Other CLIattributes 264 may include: CLIreadUserID, CLIreadPassword, CLIwriteUserID, CLIwritePassword, internetAddress, etc. where relevant. CLIactions 266 may use the CLIattributes 264 as parameters.

FIG. 5 is a schematic diagram showing interconnected CLI framework components and process steps performed by the components in operating the invention.

The interaction between the MOS 200 and the CLI framework 220 may be implemented via exchanged messages requesting CLIactions 266 to be taken in effecting changes to the operational parameters of managed data network entities (in providing persistence support). For this purpose, the CLI framework 220 registers with the MOS 200 to be informed about changes to CLIattributes 264 of managed entity object instances 206. Changes to managed entity object instances 206 are event-notified 500 by the MOS 200 to the CLI framework 220.

The CLI framework 220 comprises: a CLI processor 520 (CLIP), a CLI dictionary 530, and CLI COMmunications module 540 (CLICOM).

In accordance with the invention, the CLI framework 220 is coded in a generic fashion and is adapted to load at run-time .grammar files 226. Each .grammar file 226 holds specifications of a CLI vocabulary and an associated grammar to be used in configuring and controlling at least one particular managed data network entity (providing persistence support). The grammar and vocabulary between other things, specify, without being limited to, the: CLI command names, associated parameters, valid parameter ranges, parameter typecasting rules, parameter conversions, parameter unit specifications, parameter unit conversions, as well as contexts in which the CLI commands may be issued.

In accordance with the preferred embodiment of the invention, the .grammar files 226 are human-readable. When loaded the .grammar files 226 are interpreted by a parser 222. In accordance with an exemplary implementation of the invention, the .grammar files may be written in eXtensible Markup Language (XML).

Depending on the implementation, the .grammar files 226 may have an interdependency but the invention is not limited thereto. Benefits of associations between .grammar files 226 may be derived for .grammar files 226 associated with managed data network entities provided by a common vendor.

In accordance with the preferred software development methodology the use of .grammar files 226 enables a generic coding of the CLI framework 220 - the use of additional .grammar files 226 enables the extension of the interaction with additional CLI configurable data network entities with preferably little and ultimately no changes to the CLI framework 220 code.

The CLI vocabulary and grammar described in the .grammar files 226 is compiled into the CLI dictionary 530. The CLI dictionary 530 further codifies the CLI commands, the relations between CLI commands, and how the commands map to managed data network entities 510. Facilities such as a persistent storage may be provided for the storage and loading of the CLI dictionary 530 between CLI framework 220 restarts. Persistence storage includes but is not limited to: XML files, relational databases, proprietary solutions, etc.

The CLI processor 520 receives notifications 500 from the MOS 200 including requested CLIactions 266 to be performed. Other notifications 500 may be received by the CLI processor 520 as the MOS 200 may provide additional functionality beyond the scope of the present description. In accordance with the invention, the CLI processor 520 therefore filters 502 all received notifications 500 to extract only notifications intended for the CLI framework 220.

Having received a notification 500, the CLI processor 520 makes use of CLImapping attribute(s) to query 504 CLI dictionary entries held in the CLI dictionary 530. In processing CLImapping attributes and CLI dictionary entries the CLI processor 520 may interact 506 with the MOS 200 to request further information necessary in implementing CLIactions 266. This interaction 506 may be used to determine a configuration context (mentioned above) for a particular CLIaction 266.

The CLI framework 220 interacts 542 with the corresponding field installed managed data network entity(ies) 510 via the CLICOM module 540 for each CLIaction 266 as well as if a particular CLIattribute 264 change requires persistence support.

A CLI command sequence is built 544 to implement the specific CLIaction 266 (CLIcreate, CLIupdate, CLIread, CLIdelete etc.) based on the grammar specified in corresponding CLI dictionary entries to operate on the managed data network entity 510.

The CLICOM module 540 sends 546 each CLI command sequence to the corresponding managed data network entity 510 for execution.

The CLICOM module 540 also handles all preliminary aspects of executing the CLI command sequence on the managed data network entity 510. The preliminary aspects alluded to include but are not limited to: recognizing prompts; and logging into the managed data network entity 510 using: the CLIreadUserID, CLIreadPassword, CLIwriteUserID, CLIwritePassword; in initializing a communication session. Communication sessions may include but are not limited to: TELNET sessions over the data transport network 100, virtual terminal sessions using direct management links, etc.

The managed data network entity 510, executes 512 each CLI command in the receive CLI command sequence. The execution of each CLI command may provide feedback. The managed data network entity 512 gathers the results 514 and conveys 516 the results back to the CLICOM module 540 via the established communication session. The gathering 514 and conveying of the results back to the CLICOM module 540 may be a side effect of monitoring of the execution of the CLI commands via the prompt monitoring function mentioned above.

The CLICOM module 540 interprets 548 the received (516) results and detects errors if any. The handing of detected errors may either be performed by the CLI processor 520 as specified in CLI dictionary entries, in which case further CLI command sequences may be built 544 and sent to the managed data network entity 510 for execution; or the detected errors may be reported 550 to the MOS 200 and perhaps the ultimately to the software application(s) 210.

In executing CLI command sequences, a configuration context change must be made between the implementation of CLIactions 266 associated with dissimilar configuration contexts. In accordance with an implementation of an exemplary embodiment of the invention, the configuration context change may include resetting the configuration context by using a configuration context reset CLI command as the first CLI command of a CLI command sequence corresponding to a CLIaction 266.

A learning facility may be implemented into the CLI framework 220 whereby CLI command sequences built 544 may be stored for subsequent use. In accordance with an exemplary implementation of the invention, to optimize notification (500) processing, selected CLIactions 266 may have corresponding CLImactions 266 - where "mactions" (multiple actions) are decomposed into an undetermined number of CLIactions that could make use of the same CLI command sequence albeit with different CLI command parameters. For example, a CLImread action 266 requested on a routing table associated with an interface, would be performed as a sequence of CLIread actions 266: one for each entry in the routing table. The decomposition of the CLImaction 266 into multiple corresponding CLIactions 266 would be performed by the CLI processor 520 in the process of querying 504 the CLI dictionary 530 to build command sequence(s) 544.

In accordance with another exemplary implementation of the invention, atomic CLIread actions 266 may be defined on managed data network entities. In the process of querying 504 the CLI dictionary 530, the CLI processor 520 and the CLICOM module 540 would build 544 CLI command sequences to obtain values for every operational parameter associated with the managed data network entity.

In accordance with the software development methodology implementing the abstract coding of the software applications 210, special attention is given to create and delete actions. Basic create and delete actions are used for both physical managed data network entities as well as for logical managed data network entities. The connotations of "create" and "delete" imply the manipulation of the existence of a particular managed data network entity. Although this may be so for logical managed data network entities such as data links, paths 128, virtual routers, etc., a basic or CLI create/delete action performed on a physical managed data network entity is to be implemented as an inclusion/exclusion of the physical managed data network entity into/from the real of influence of the network management and service provisioning solution provided.

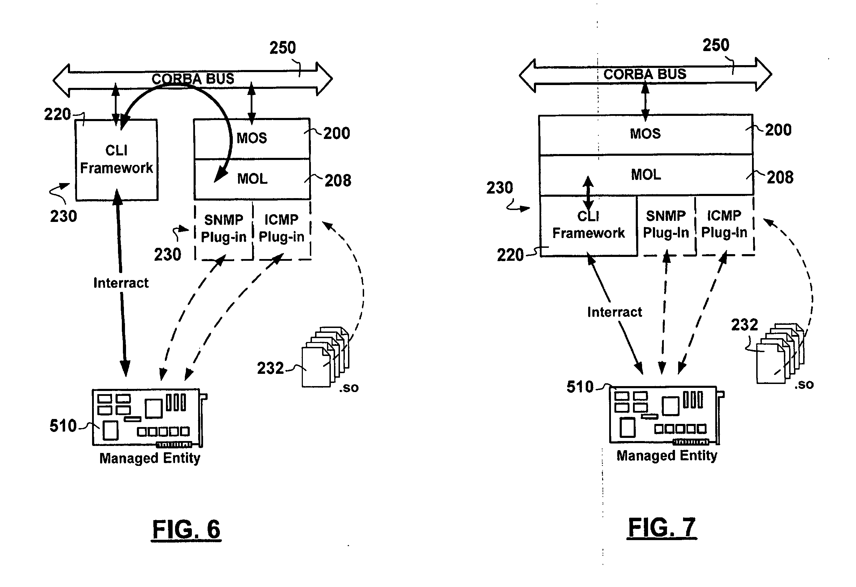

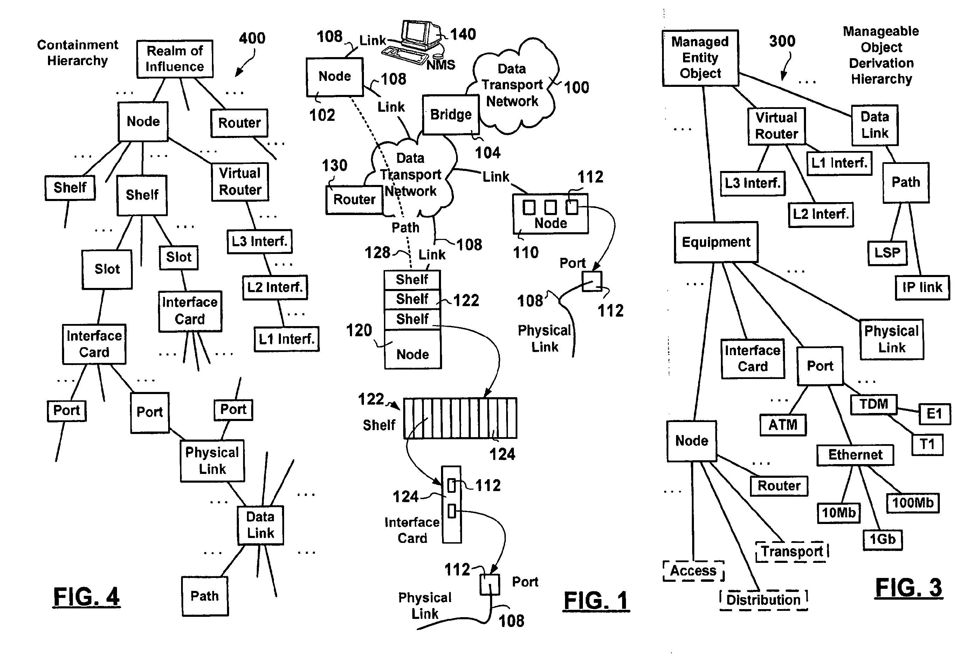

Although in the embodiments described above, the CLI framework 220 was presented as a separate enabling technology component 230 associated with the MOS 200 as shown in FIG. 6; the CLI framework 220 may be implemented as a plug-in enabling technology component (persistence plug-in) 230 to the MOS 200 as shown in FIG. 7. The invention is not limited to the above prosecuted embodiments.

In accordance with a preferred implementation of the invention, multiple actions 262 may be issued by a variety of software applications 210 and consequently multiple CLIactions 266 are preferably processed by the CLI framework 220 in parallel. Care is to be taken in coding such implementations to eliminate configuration conflicts. The elimination of configuration conflicts as well as prioritization of configuration changes may be implemented via queuing of CLIactions 266 to be processed by the CLI framework 220. The parallel processing requires the use of multi-threading, multi-tasking coding techniques known to persons of skill in the art and are beyond the scope of the present description.

The present invention automates the CLI command entry task in a network management and service provisioning environment comprised of diverse data network entities each of which has an associated CLI vocabulary. A CLI command dictionary 530 consolidates all data network entity specific CLI vocabularies and serves the CLI framework 220 with context specific CLI commands for building CLI command sequences. CLI command sequences are subsequently sent for execution by intended managed data network entities 510 while the execution thereof is monitored for feedback.

The embodiments presented are exemplary only and persons skilled in the art would appreciate that variations to the above described embodiments may be made without departing from the scope of the claims. The scope of the invention is solely defined by the appended claims.

## Claims

1. A Command Line Interface (CLI) framework for a network manager (NM) that manages a plurality of managed entities of a communication network, comprising:
a CLI dictionary (530) holding vocabulary and grammar specifications for all commands used in interacting with all managed entity objects for codifying a plurality of entity-specific CLI commands and maintaining the mapping between the CLI commands and managed objects in a managed object layer (208);
a generic processor (520) for detecting an event affecting a managed object, generating a sequence of commands required to configure a managed entity that said managed object represents in response to said event and handling execution of said sequence of commands at said managed entity; and
a communications module (540) for transmitting said sequence of commands to said managed entity for execution, and interpreting results received from said managed entity,
wherein a network management and service provisioning solution is provided making abstraction of the type of managed entity, and
a parser (222) for populating the dictionary with vocabulary and grammar specifications extracted from a plurality of .grammar files (226) for each types of managed entity,
wherein the .grammar files (226) comprise human readable specifications.

2. CLI framework as claimed in claim 1, wherein the parser (222) is adapted to load a .grammar file in said CLI dictionary (530) pertinent to said managed object at run-time to enable extended support for additional managed entities on demand, to expand capabilities provided by the framework.

3. CLI framework as claimed in anyone of claims 1 to 2, wherein each .grammar file comprises specifications of CLI vocabulary and grammar to be used in configuring and controlling a particular managed entity for enabling development, maintenance, update, deployment, and provisioning support to said particular managed entity.

4. CLI framework as claimed in any one of claims 1 to 3, wherein the .grammar files are eXtensible Markup Language (XML) files.

5. CLI framework as claimed in any one of claims 1 to 4, further comprising an event notification filter (224) for providing the generic processor only with event notifications generated by events intended for CLI framework.

6. CLI framework as claimed in any one of claims 1 to 5, further comprising a command sequence learning facility for storing said sequence of command for further use, to improve processing of repeated actions.

7. CLI framework as claimed in any one of claims 1 to 6, wherein said dictionary (530) is stored on a persistent storage.

8. CLI framework as claimed in any one of claims 1 to 7, wherein the framework is one of: a client entity, a server entity, a component entity, a plug-in component entity, and a run-time loadable plug-in component entity associated with a managed object server entity used in providing the network management and service provisioning solution.

9. CLI framework as claimed in any one of claims 1 to 8, wherein the managed object server entity used in providing the network management and service provisioning solution is adapted to exchange the at least one notification with the framework.

10. A method for automated configuration of a managed entity (104, 108, 112, 120, 122, 124, 128, 130) of a communication network equipped with a network manager (140), the managed entity being represented by a managed object (300, 400) in a managed object layer (208), the method comprising the steps of:
i) providing the network manager with a command line interface (CLI) dictionary (530) holding vocabulary and grammar specifications for all commands used in interacting with all managed entity objects in the managed object layer (208) over a CLI; loading .grammar files using a parser, interpreting the .grammar files to extract vocabulary and grammar specifications of CLI commands used in interacting with a managed entity; and populating dictionary entries with the extracted vocabulary and grammar specifications; wherein the grammar files (226) comprise human readable specifications;
ii) detecting a change in the information stored in the managed object layer (208) for said managed object;
iii) identifying a dictionary entry for said managed object from the CLI dictionary;
iv) retrieving, based on the CLI dictionary entry, CLI commands required to effect the change to said managed object;
v) deriving from the extracted CLI commands a sequence of commands required to configure said managed entity;
vi) sending for execution each one of the commands in the derived sequence of commands to said managed entity; and
vii) monitoring the execution of each one of the commands sent.

11. Method as claimed in claim 10, wherein said change includes a desired change of at least one of: an operational parameter of said managed entity, an operational state of said managed entity, and the configuration of said managed entity.

12. Method as claimed in claim 11, wherein step vii) comprises:
monitoring the response of the managed entity to each command in turn; and
interpreting the response after execution of each command.

13. Method as claimed in any one of claims 10 to 12, further comprising: viii) sending the next command in the sequence of commands in dependence upon the response being in accordance with a correct response corresponding to the command.

14. Method as claimed in any one of claims 10 to 13, wherein prior to sending for execution each one of the commands in the sequence of commands to said managed entity, the method further comprises establishing a communication session with said managed entity.

15. Method as claimed in any one of claims 10 to 14, further comprising generating an error report based on an unsuccessful execution of at least one command.

16. Method as claimed in claim 15, wherein loading .grammar files further comprises selecting .grammar for on demand loading thereof.

17. Method as claimed in claim 16, further comprising retrievably storing the dictionary between restarts.

## Patentansprüche

1. Rahmenumgebung für eine Befehlszeilenschnittstelle (CLI) für einen Netzverwalter (NM), der eine Vielzahl von verwaltete Einheiten eines Kommunikationsnetzes verwaltet, welche umfasst:
ein CLI-Verzeichnis (530), das Vokabular und Grammatikspezifikationen für alle Befehle enthält, die beim Wechselwirken mit allen Objekten der verwalteten Einheiten verwendet werden, zum Festlegen des Codes für eine Vielzahl von für die Einheiten spezifischen CLI-Befehlen und Aufrechterhalten der Zuordnung zwischen den CLI-Befehlen und den verwalteten Objekten in einer Schicht (208) der verwalteten Objekte;
einen generischen Prozessor (520) zum Erfassen eines Ereignisses, das ein verwaltetes Objekt betrifft, Erzeugen einer Folge von Befehlen, die erforderlich sind, um eine verwaltete Einheit, die das verwaltete Objekt repräsentiert, in Antwort auf das Ereignis zu konfigurieren, und Erledigen der Ausführung der Folge von Befehlen bei der verwalteten Einheit; und
ein Kommunikationsmodul (540) zum Übertragen der Folge von Befehlen zur verwalteten Einheit zur Ausführung und zum Interpretieren der von der verwalteten Einheit empfangenen Ergebnisse,
wobei eine Lösung zur Netzverwaltung und
Dienstebereitstellung bereitgestellt wird, die von der Art der verwalteten Einheit abstrahiert, und
einen Parser (222) zum Bevölkern des Verzeichnisses mit Vokabular und Grammatikspezifikationen, die aus einer Vielzahl von Grammatikdateien (226) für jede Art von verwalteter Einheit extrahier werden,
wobei die Grammatikdateien (226) für den Menschen lesbare Spezifikationen umfassen.

2. CLI-Rahmenumgebung nach Anspruch 1, bei der der Parser (222) so ausgelegt ist, dass er eine Grammatikdatei in das CLI-Verzeichnis (530) lädt, das für das verwaltete Objekt zur Laufzeit relevant ist, um eine ausgedehnte Unterstützung für zusätzliche verwaltete Einheiten auf Anforderung zu ermöglichen, um die durch die Rahmenumgebung bereitgestellten Fähigkeiten zu erweitern.

3. CLI-Rahmenumgebung nach einem der Ansprüche 1 bis 2, bei der jede Grammatikdatei Spezifikationen eines CLI-Vokabulars und -Grammatik umfasst, die beim Konfigurieren und Steuern einer bestimmten verwalteten Einheit verwendet werden sollen, um Entwicklung, Pflege, Aktualisierung, Einsatz und Bereitstellung von Unterstützung für die bestimmte verwaltete Einheit zu ermöglichen.

4. CLI-Rahmenumgebung nach einem der Ansprüche 1 bis 3, bei der die Grammatikdateien Dateien in erweiterbarer Markierungssprache (XML) sind.

5. CLI-Rahmenumgebung nach einem der Ansprüche 1 bis 4, die ferner einen Ereignismitteilungsfilter (224) umfasst, um den generischen Prozessor nur mit Ereignismitteilungen zu versorgen, die von für die CLI-Rahmenumgebung vorgesehenen Ereignissen erzeugt werden.

6. CLI-Rahmenumgebung nach einem der Ansprüche 1 bis 5, die ferner eine Lerneinrichtung für Befehlsfolgen zum Speichern der Folge von Befehlen für eine weitere Verwendung umfasst, um die Verarbeitung von wiederholten Aktionen zu verbessern.

7. CLI-Rahmenumgebung nach einem der Ansprüche 1 bis 6, bei der das Verzeichnis (530) auf einem Dauerspeicher gespeichert ist.

8. CLI-Rahmenumgebung nach einem der Ansprüche 1 bis 7, bei der die Rahmenumgebung eine ist aus: Client-Einheit; Server-Einheit, Komponenteneinheit, einsteckbarer Komponenteneinheit und in der Laufzeit ladbarer, einsteckbarer Komponenteneinheit, die zu einer Server-Einheit des verwalteten Objekts gehört, die bei der Bereitstellung der Lösung für Netzverwaltung und Dienstebereitstellung verwendet wird.

9. CLI-Rahmenumgebung nach einem der Ansprüche 1 bis 8, bei der die Server-Einheit des verwalteten Objekts, die bei der Bereitstellung der Lösung für Netzverwaltung und Dienstebereitstellung verwendet wird, dafür ausgelegt ist, die wenigstens eine Mitteilung mit der Rahmenumgebung auszutauschen.

10. Verfahren zur automatisierten Konfiguration einer verwalteten Einheit (104, 108, 112, 120, 122, 124, 128, 130) eines mit dem Netzverwalter (140) ausgestatten Kommunikationsnetzes, wobei die verwaltete Einheit durch ein verwaltetes Objekt (300, 400) in einer Schicht (208) verwalteter Objekte repräsentiert wird, wobei das Verfahren die Schritte umfasst:
i) Versorgen des Netzverwalters mit einem Verzeichnis (530) für die Befehlszeilenschnittstelle (CLI), das Vokabular und Grammatikspezifikationen für alle Befehle enthält, die beim Wechselwirken mit allen Objekten der verwalteten Einheiten in der Schicht (208) der verwalteten Objekte über eine CLI verwendet werden; Laden der Grammatikdateien unter Verwendung eines Parsers, der die Grammatikdateien interpretiert, um Vokabular und Grammatikspezifikationen für CLI-Befehle zu extrahieren, die beim Wechselwirken mit einer verwalteten Einheit verwendet werden; und Bevölkern der Verzeichniseinträge mit extrahiertem Vokabular und Grammatikspezifikationen; wobei die Grammatikdateien (226) für Menschen lesbare Spezifikationen umfassen;
ii) Erfassen einer Änderung in der Information, die in der Schicht (208) für verwaltete Objekte für das verwaltete Objekt gespeichert ist;
iii) Identifizieren eines Verzeichniseintrags für das verwaltete Objekt aus dem CLI-Verzeichnis;
iv) Abrufen von CLI-Befehlen, die für die Ausführung der Änderung an dem verwalteten Objekt erforderlich sind, auf Basis des Eintrags im CLI-Verzeichnis;
v) Herleiten einer Folge von Befehlen, die zum Konfigurieren der verwalteten Einheit erforderlich sind, aus den extrahierten CLI-Befehlen;
vi) Senden jedes der Befehle in der hergeleiteten Folge von Befehlen an die verwaltete Einheit zum Ausführen; und
vii) Überwachen der Ausführung jedes der gesendeten Befehle.

11. Verfahren nach Anspruch 10, bei dem die Änderung eine erwünschte Änderung wenigstens eines beinhaltet aus:
einem Betriebsparameter der verwalteten Einheit, einem Betriebszustand der verwalteten Einheit und der Konfiguration der verwalteten Einheit.

12. Verfahren nach Anspruch 11, bei dem Schritt vii) umfasst:
Überwachen der Antwort der verwalteten Einheit auf jeden Befehl der Reihe nach; und
Interpretieren der Antwort nach Ausführung jedes Befehls.

13. Verfahren nach einem der Ansprüche 10 bis 12, das ferner umfasst: viii) Senden des nächsten Befehls in der Folge von Befehlen in Abhängigkeit davon, dass die Antwort mit einer korrekten Antwort übereinstimmt, die dem Befehl entspricht.

14. Verfahren nach einem der Ansprüche 10 bis 13, bei dem vor dem Senden jedes der Befehle in der Folge von Befehlen an die verwaltete Einheit zur Ausführung das Verfahren ferner das Aufbauen einer Kommunikationsverbindung mit der verwalteten Einheit umfasst.

15. Verfahren nach einem der Ansprüche 10 bis 14, das ferner das Erzeugen eines Fehlerberichts auf der Basis einer erfolglosen Ausführung wenigstens eines Befehls umfasst.

16. Verfahren nach Anspruch 15, bei dem das Laden der Grammatikdateien ferner das Auswählen von Grammatik für ein Laden derer auf Anforderung umfasst.

17. Verfahren nach Anspruch 16, das ferner das abrufbare Speichern des Verzeichnisses zwischen Neustarts umfasst.

## Revendications

1. Structure d'interface de ligne de commande (CLI) pour un gestionnaire de réseau (NM) qui gère une pluralité d'entités gérées d'un réseau de communication, comprenant :
un dictionnaire CLI (530) contenant des spécifications de vocabulaire et de grammaire pour toutes les commandes utilisées en interagissant avec tous les objets d'entité gérés pour codifier une pluralité de commandes CLI spécifiques à l'entité et maintenir le mappage entre les commandes CLI et les objets gérés dans une couche d'objets gérés (208) ;
un processeur générique (520) pour détecter un événement affectant un objet géré, générer une séquence de commandes nécessaires pour configurer une entité gérée que ledit objet géré représente en réponse au dit événement et gérer l'exécution de ladite séquence de commandes au niveau de ladite entité gérée ; et
un module de communication (540) pour transmettre ladite séquence de commandes à ladite entité gérée pour l'exécution et interpréter des résultats reçus à partir de ladite entité gérée,
dans laquelle une solution de gestion de réseau et de fourniture de services est prédisposée en faisant abstraction du type d'entité gérée, et
un analyseur syntaxique (222) pour remplir le dictionnaire avec des spécifications de vocabulaire et de grammaire extraites d'une pluralité de fichiers .grammaire (226) pour chaque type d'entité gérée,
dans laquelle les fichiers .grammaire (226) comprennent des spécifications lisibles par l'homme.

2. Structure CLI selon la revendication 1, dans laquelle l'analyseur syntaxique (222) est adapté pour charger un fichier .grammaire dans ledit dictionnaire CLI (530) pertinent pour ledit objet géré au temps d'exécution pour permettre un support étendu pour des entités gérées additionnelles à la demande, pour étendre des capacités fournies par la structure.

3. Structure CLI selon l'une quelconque des revendications 1 à 2, dans laquelle chaque fichier .grammaire comprend des spécifications de vocabulaire et grammaire CLI à utiliser dans la configuration et le contrôle d'une entité gérée particulière pour permettre le développement, la maintenance, la mise à jour, le déploiement et le support de fourniture à ladite entité gérée particulière.

4. Structure CLI selon l'une quelconque des revendications 1 à 3, dans laquelle lesdits fichiers .grammaire sont des fichiers en langage de balisage extensible (XML).

5. Structure CLI selon l'une quelconque des revendications 1 à 4, comprenant en outre un filtre de notification d'événement (224) pour fournir au processeur générique seulement des notifications d'événement générées par des événements destinés à la structure CLI.

6. Structure CLI selon l'une quelconque des revendications 1 à 5, comprenant en outre une fonction d'apprentissage de séquence de commande pour mémoriser ladite séquence de commandes pour une utilisation ultérieure, pour améliorer le traitement d'actions répétées.

7. Structure CLI selon lune quelconque des revendications 1 à 6, dans laquelle ledit dictionnaire (530) est mémorisé sur une mémoire persistante.

8. Structure CLI selon lune quelconque des revendications 1 à 7, dans laquelle la structure est l'une parmi : une entité de client, une entité de serveur, une entité de composant, une entité de composant enfichable et une entité de composant enfichable chargeable au temps d'exécution associée à une entité de serveur d'objets gérés utilisée pour la fourniture de la solution de gestion de réseau et de fourniture de services.

9. Structure CLI selon lune quelconque des revendications 1 à 8, dans laquelle l'entité de serveur d'objets gérés utilisée pour la fourniture de la solution de gestion de réseau et de fourniture de services est adaptée pour échanger l'au moins une spécification avec la structure.

10. Procédé pour la configuration automatisée d'une entité gérée (104, 108, 112, 120, 122, 124, 128, 130) d'un réseau de communication équipé d'un gestionnaire de réseau (140), l'entité gérée étant représentée par un objet géré (300, 400) dans une couche d'objets gérés (208), le procédé comprenant les étapes consistant à :
i) munir le gestionnaire de réseau d'un dictionnaire d'interface de ligne de commande (CLI) (530) contenant des spécifications de vocabulaire et de grammaire pour toutes les commandes utilisées en interagissant avec tous les objets d'entité gérés dans une couche d'objets gérés (208) sur une CLI ; charger des fichiers .grammaire en utilisant un analyseur syntaxique ; interpréter les fichiers .grammaire pour extraire des spécifications de vocabulaire et de grammaire de commandes CLI utilisées pour interagir avec une entité gérée ; et remplir des entrées de dictionnaire avec les spécifications de vocabulaire et de grammaire extraites ; dans lequel les fichiers .grammaire (226) comprennent des spécifications lisibles par l'homme ;
ii) détecter un changement dans les informations mémorisées dans la couche d'objets gérés (208) pour ledit objet géré ;
iii) identifier une entrée de dictionnaire pour ledit objet géré à partir du dictionnaire CLI ;
iv) récupérer, sur la base de l'entrée de dictionnaire CLI, des commandes CLI nécessaires pour effectuer le changement pour ledit objet géré ;
v) dériver à partir des commandes CLI extraites une séquence de commandes nécessaire pour configurer ladite entité gérée ;
vi) transmettre pour l'exécution chacune des commandes dans la séquence de commandes désirée à ladite entité gérée ; et
vii) surveiller l'exécution de chacune des commandes transmises.

11. Procédé selon la revendication 10, dans lequel ledit changement comprend un changement désiré d'au moins un parmi :
un paramètre de fonctionnement de ladite entité gérée, un état de fonctionnement de ladite entité gérée et la configuration de ladite entité gérée.

12. Procédé selon la revendication 11, dans lequel l'étape vii) consiste à :
surveiller la réponse de l'entité gérée pour chaque commande à son tour ; et
interpréter la réponse après exécution de chaque commande.

13. Procédé selon l'une quelconque des revendications 10 à 12, consistant en outre à : viii) transmettre la commande suivante dans la séquence de commandes en fonction du fait que la réponse est conforme à une réponse correcte correspondant à la commande.

14. Procédé selon l'une quelconque des revendications 10 à 13, dans lequel, avant de transmettre pour l'exécution chacune des commande dans la séquence de commandes à ladite entité gérée, le procédé consiste en outre à établir une session de communication avec ladite entité gérée.

15. Procédé selon l'une quelconque des revendications 10 à 14, consistant en outre à générer un rapport d'erreurs basé sur une exécution infructueuse d'au moins une commande.

16. Procédé selon la revendication 15, dans lequel le chargement de fichiers .grammaire consiste en outre à sélectionner une grammaire pour un chargement à la demande de celle-ci.

17. Procédé selon la revendication 16, consistant en outre à mémoriser de manière récupérable le dictionnaire entre des redémarrages.
